# EUROPEAN PATENT APPLICATION

(11) **EP 4 488 187 A1**
(43) Date of publication of application: **08.01.2025**
(21) Application number: 24182519.9
(22) Date of filing: 17.06.2024
(51) Int. Cl.: B65B 51/32, B65B 9/20, B29C 65/00, B65B 51/30, B65B 65/00

(54) **SACHET PACKAGING MACHINE**

(30) Priority: 06.07.2023 IT 202300014163
(71) Applicant: Boato Pack S.r.L. a Socio Unico, 34079 Staranzano (GO) (IT)
(72) Inventor: Di Fede, Andrea, 34074 Monfalcone (GO) (IT); Zanello, Andrea, 33050 Bagnaria Arsa (IT); Prodan, Roberto, 34074 Monfalcone (IT)
(74) Representative: Lunati & Mazzoni S.r.L.

(57) **Abstract**

A sachet packaging machine (1) suitable for producing filled sachets (100) comprising sealed sachets (101) containing a product (102), the sachet packaging machine (1) being at least configured to convert at least one pair of sheets (10) into sachets (101), to insert the product (102) into the sachets (101) so as to obtain filled sachets (100), the sachet packaging machine (1) comprising at least: a handling unit (2), suitable for handling the sheets (10) along a feed direction (2a); a sealing unit (3) suitable for performing a sealing operation of the sheets (10) so as to obtain each of the sachets (101), and comprising at least a first heat-sealing device (30) suitable for sealing the sheets (10) along an axis (3a) by making a heat sealing (103); the heat-sealing device (30, 33) comprising at least one heating element (32) suitable for contacting the sheets (10) and making a heat sealing; each of at least one heating element (32) defining a contact surface (300) suitable for coming into contact with the sheets (10) to accomplish the heat sealing (103), the heat sealing (103) being coincident with the portion of the sheets (10) coming into contact with the contact surface (300); a filling unit (4) suitable to inserting the product (102) into each of the sachets (101); at least one insert (5) located adjacent to each contact surface (300) and configured to reduce heat diffusion from the heating element (32) to the sheets (10); each insert (5) includes a cavity (50) internal to the insert (5) and suitable for letting a refrigerant fluid pass through it.

## Description

This invention relates to a sachet packaging machine of the type specified in the preamble of the first claim.

The object of this invention is a sachet packaging machine that finds application in packaging and mainly, but not exclusively, in the food, cosmetic and pharmaceutical industries.

Mechanical devices are currently known for producing sachets and filling said sachets with the products they are intended to contain. These devices are designed in such a way that they perform both the sealing operation and the filling operation almost simultaneously.

One type of these devices includes a pair of counter-rotating rollers that perform both the function of accompanying the movement of the starting material, typically a pair of sheets, toward the sealing zone, corresponding to the area between the two rollers. The two sheets are placed so that they are parallel. At this point, sealing is done along the vertical and horizontal edges so as to obtain the sachet.

The device performs the filling of the sachet left open along the top side, and then places the product inside.

Typically, the product feeding operation is carried out by means of a nozzle positioned at the top to match the opening between the two rollers, in the space where the sachet being formed will be placed.

The product placed in the sachets can be of various types, depending on its intended use. For example, the product may be solid, in particular granular, or liquid. They can be products intended for the food, pharmaceutical, cosmetic, or other sector. For example, in the food sector, the product may be a powder for making a beverage, a granular product such as sugar, or a liquid such as mayonnaise or mustard. In cosmetics, the product can be a liquid such as a shampoo, body wash or body lotion.

After the product is fed in the sachet, the sealing of the top edge is carried out to seal the sachet. Sealing can be done by heat sealing or, in some cases, by compression of an adhesive.

Known sachet packaging machines include cooling systems to prevent local overheating of the sachet material that could damage it. In particular, local burns may occur, leading to both aesthetic and functional damage.

The prior art just described includes some important drawbacks.

In particular, cooling systems fail to prevent overheating damage to the material at all stages of the process. In particular, known devices do not enable efficient temperature control in the most delicate steps. Therefore, the material remains exposed to risks of overheating, burning, deformation, etc.

This critical issue means that known sachet packaging machines can produce defective products that need to be discarded, resulting in wasted material and reduced product accuracy.

In this situation, the technical task underlying this invention is to devise an improved sachet packaging machine capable of substantially overcoming at least part of the aforementioned drawbacks.

In the context of this technical task, it is an important aim of the invention to obtain a sachet packaging machine that is capable of avoiding material overheating. Another important purpose of the invention is to make a sachet packaging machine able to improve the accuracy of the products made.

Finally, another important purpose of the invention is to make a sachet packaging machine that improves production efficiency by reducing waste.

The technical task and the specified aims are achieved by a sachet packaging machine as claimed in the annexed claim 1.

Preferred embodiments are highlighted in the dependent claims.

The characteristics and benefits of the invention will be clarified in the following detailed description of some preferred embodiments of the invention, with reference to the accompanying drawings, wherein:

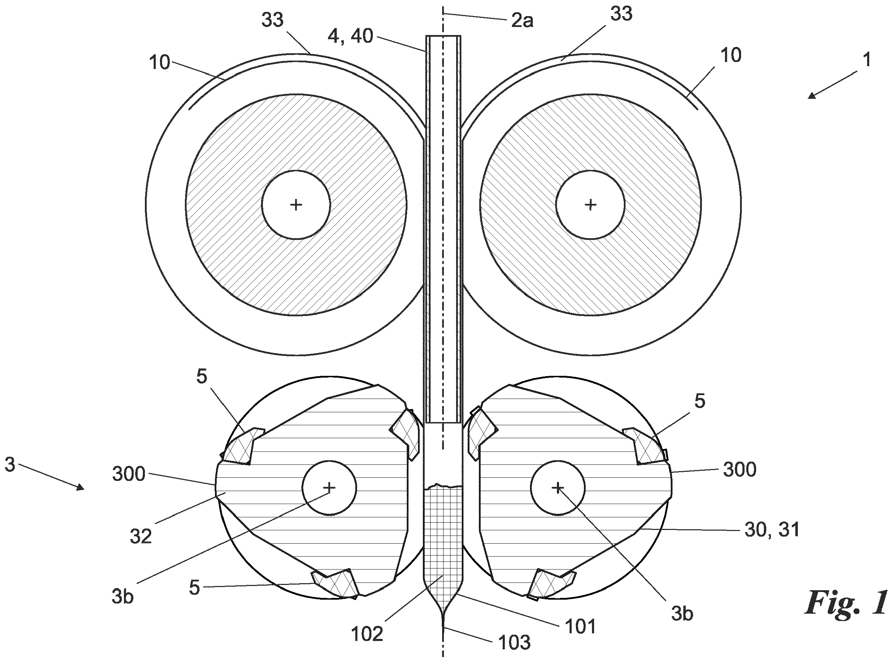

**Fig. 1** shows a cross section of a first configuration of a portion of a sachet packaging machine according to the invention;
**Fig. 2** shows a cross section of a second configuration of a portion of a sachet packaging machine according to the invention;

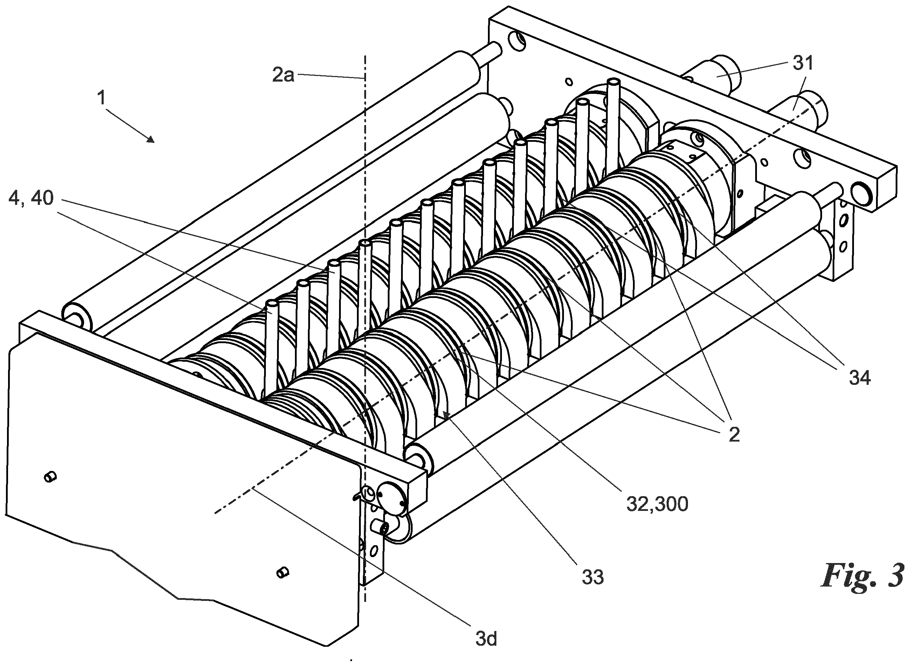

**Fig. 3** is an axonometric view of a first portion of a sachet packaging machine according to the invention;

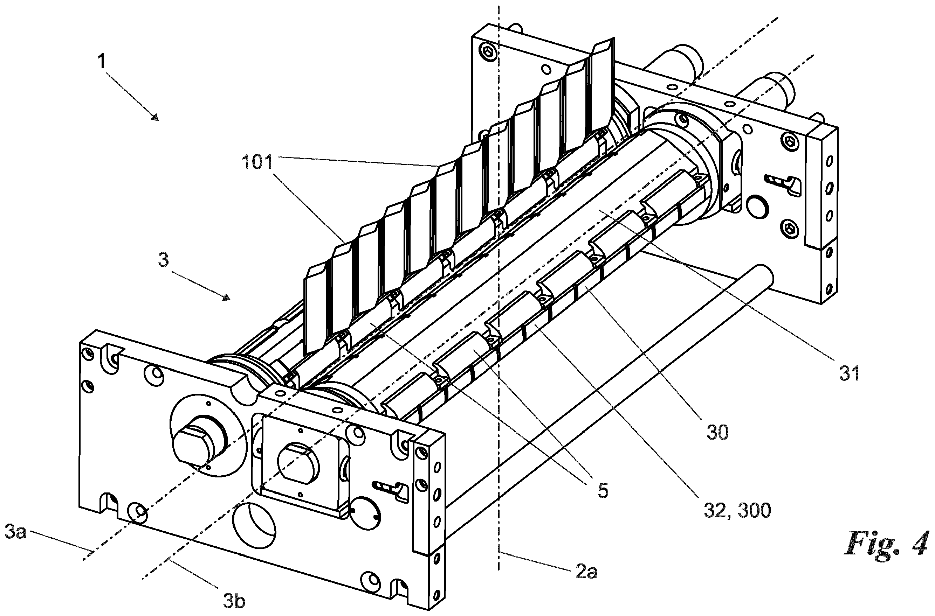

**Fig. 4** is an axonometric view of a second portion of a sachet packaging machine according to the invention;

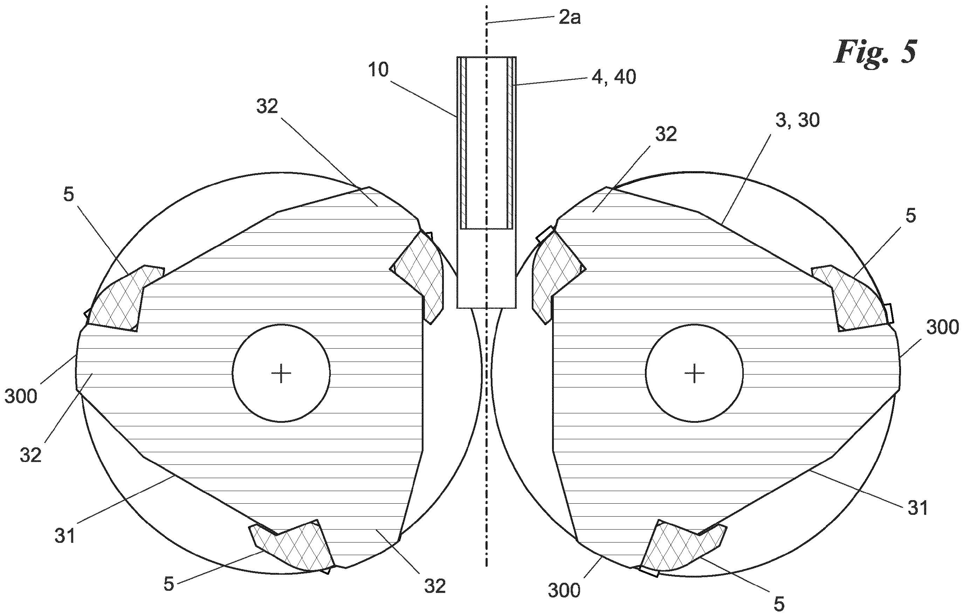

**Fig. 5** shows a first cross section of a second portion of a sachet packaging machine according to the invention;

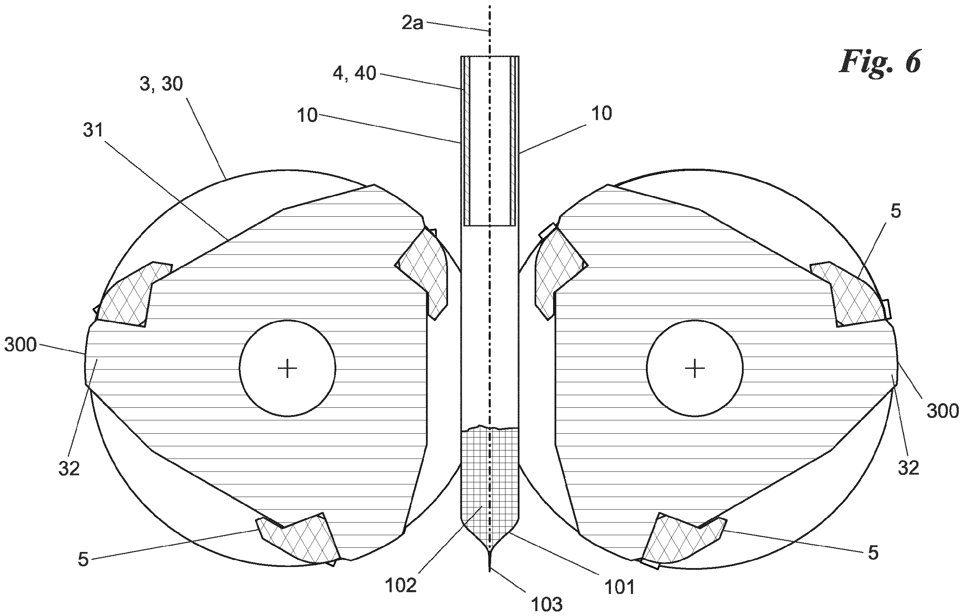

**Fig. 6** shows a second cross section of a second portion of a sachet packaging machine according to the invention;

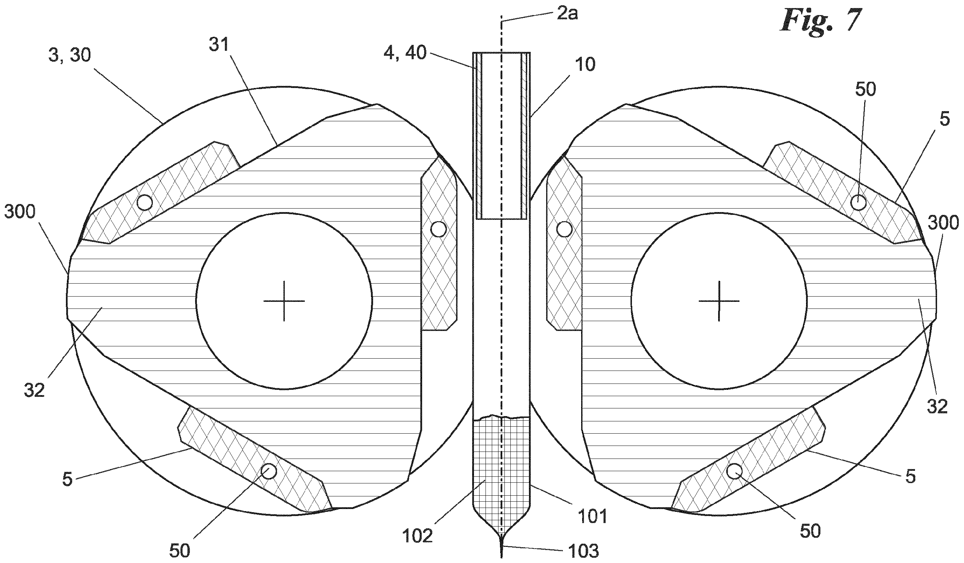

**Fig. 7** shows a third cross section of a second portion of a sachet packaging machine according to the invention; and

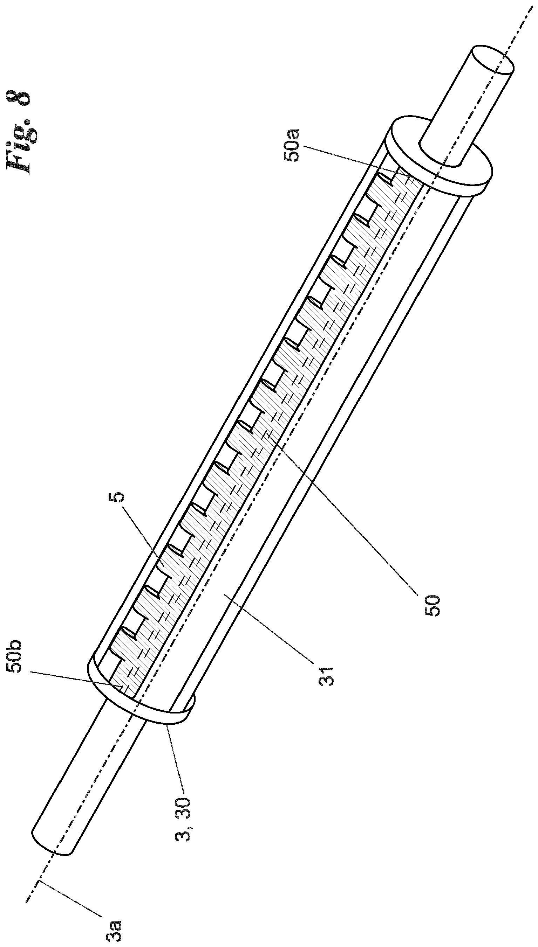

**Fig. 8** is an axonometric view of a detail of the sachet packaging machine according to the invention.

In this document, when measurements, values, shapes, and geometric references (such as perpendicularity and parallelism) are associated with words like "approximately" or other similar terms, such as "almost" or "substantially", they shall be understood as except for errors of measurement or imprecisions due to errors of production and/or manufacturing and, above all, except for a slight departure from the value, measurement, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as reflected in the following discussions, terms such as "processing", "computing", "determination", "computation", or the like are considered to refer to the action and/or processes of a computer or similar electronic computing device that manipulates and/or transforms data represented as physical, such as electronic quantities of records of a computer system and/or memories, in other data similarly represented as physical quantities within computer systems, records, or other information storage, transmission, or display devices.

The measurements and data reported in this text are to be considered, unless otherwise indicated, as performed in the International Standard Atmosphere ICAO (ISO 2533:1975).

With reference to the figures, the sachet packaging machine according to the invention is globally indicated with the number **1.**

The sachet packaging machine 1 is suitable for producing filled sachets **100.** Filled sachets 100 include sealed sachets **101** containing a product **102.** The sachets 101 can be food sachets or pharmaceutical or detergent sachets.

Product 102 can be a food, liquid or granular solid, or a detergent or medication. Some examples of product 102 can be ketchup, mayonnaise, sugar, shampoo, body wash or a granular medication.

Sachet packaging machine 1 is at least configured to turn at least one pair of sheets **10** into sachets 101. A pair of sheets 10 is made into a sachet 101 by sealing.

In addition, sachet packaging machine 1 is at least configured to insert product 102 into sachets 101 in order to obtain filled sachets 100.

Sachet packaging machine 1, therefore, can perform both operations of converting sheets 10 into sachets 101 and filling sachets 101 with product 102.

The sachet packaging machine 1 comprises at least one handling unit **2.** The handling unit 2 is suitable for handling the sheets 10. They are moved along a feed direction **2a.** The feed direction is preferably the direction along which the sheets 10 are aligned during the sachet 101 transformation operation.

Handling elements 2 can be a pair of cylinders each rotating around a rotation axis perpendicular to the feed direction 2a. Each of the pair of sheets 10 slides on one of the two cylinders respectively and is conveyed to the space between the two cylinders.

In an alternative configuration of the sachet packaging machine 1, the pair of sheets 10 can be handled at a later stage in the process transforming sheets 10 into sachets 101 and filling as known to the skilled person.

The sachet packaging machine 1 includes a filling unit **4.** This is suitable for inserting product 102 into each of said sachets 101. In a possible configuration of the sachet packaging machine 1, the filling unit 4 may include at least one feeding nozzle **40.** The filling unit 4 can be placed in an elevated position above the other components of the sachet packaging machine 1 so that the product 102 falls by gravity into the sachets 101 as they are being formed.

To that end, the sachet packaging machine 1 comprises at least one sealing unit **3.** Each sealing unit 3 is suitable for performing a sealing operation of sheets 10 so as to obtain each sachet 101.

Sealing takes place along at least one sealing axis **3a.** The sealing axis 3a also defines the direction of an edge of sachet 101. The sealing axis 3a is preferably perpendicular to the feed direction 2a. As an alternative, the sealing axis 3a is parallel to the feed direction 2a.

Sealing is also preferably done along an additional axis, not parallel, and preferably perpendicular, to the sealing axis 3a. Alternatively, along the same axis, a bonding could be made or the sheets could be provided already mutually joined.

Each sealing unit 3 includes mechanical organs and drive devices. Specifically, each sealing unit 3 includes at least one heat-sealing device. In detail, sealing is done by localized heating and partial melting of the pair of sheets 10 pressed against each other in the area where sealing is to be done.

In this way, a heat sealing **103** is achieved. The heat sealing 103 corresponds to the portion of sachet 101 where the sealing took place.

Preferably, the sachet packaging machine 1 includes a first heat-sealing device **30** designed to seal the sheets 10 along a sealing axis 3a perpendicular to the feed direction 2a.

The first heat-sealing device 30 includes at least one heating element **32.** It is suitable for making contact with the sheets 10 and carrying out heat sealing. For example, a heating element 32 may include a component with high thermal conductivity placed in contact with a heat source, such as an electrical resistance. In this way, the high-temperature heating element 32 can cause localized melting of sheets 10.

In detail, each heating element 32 defines a contact surface **300.** It is suitable for making contact with the sheets 10 and carrying out heat sealing 103. Therefore, it is coincident with the portion of the sheets 10 that came in contact with the contact surface 300. Each heat-sealing 103 defines the edges of the inner space to each sachet 101 that can be occupied by the product 102.

The first sealing device 10 includes preferably at least one pair of heating elements 32. They can be components made of metallic material placed in contact with an electrical resistor that can raise the temperature of the components by means of the Joule effect.

The heating elements 32 may also coincide with the entire first heat-sealing devices 30.

In other possible embodiments of the sachet packaging machine 1, the heating elements 32 may also correspond only to the portions of the first heat-sealing devices 30 configured to directly contact the sheets 10.

Each first heat-sealing device 30, since it includes the heating elements 32, accordingly, preferably includes a pair of contact surfaces 300. The contact surfaces 300 are configured to substantially contact each other by including and sandwiching said sheets 10 when said heat sealing 103 is carried out.

Each first heat-sealing device 30 is preferably placed on rotating elements **31.** For example, the rotating elements 31 may be a pair of cylindrical rollers on which each heat-sealing device 30 is arranged, extending in the axial direction.

In this regard, rotating elements 31 are preferably counter-rotating. In addition, they can rotate at the same speed. Each is preferably aligned and rotating around a first rotation axis **3b.** Said axis is parallel to the sealing axis that it carries out and is preferably perpendicular to the feed direction 2a.

In addition, each of them preferably defines a body from which at least one of the heating elements 32 protrudes radially with respect to the rotation axis 3b. In this way, as the pair of rollers rotates, when a pair of heating elements 32, thus a pair of contact surfaces 300, reaches the position of minimum distance, it performs the sealing by sandwiching on the sheets 10. In detail, the heating elements 32 present on the same rotating element 31 can be equidistant along a circumference having its center on the rotation axis 3b. The heating elements 32 on one of the two rollers of the pair are arranged symmetrically with respect to the heating elements 32 on the other roller of the pair, with mirror symmetry with respect to a plane parallel to the feed direction 2a.

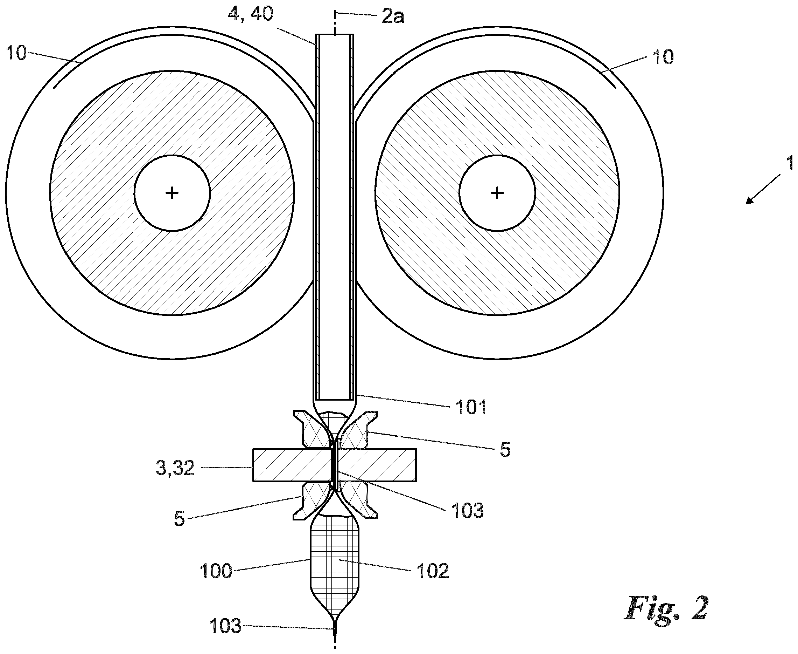

Alternatively, as shown in Fig. 2, the heating elements 32 move in alternating and opposing motions, thus realizing contact and fusion sealing, as in the case of rotating heating elements 32.

Second heat-sealing devices **33** may be present in the sachet packaging machine 1. They are, preferably, devices configured to make heat sealings 103 along an axis parallel to the feed direction 2a. Preferably they act, thermally, as the first heat-sealing device 30. In addition, the heat sealings 103 made by the second heat sealing devices 33 separate the sachets 101 along the feed direction 2a, by means of separating devices **34,** and form their edges parallel to said feed direction 2a. Preferably, the second heat-sealing devices 33 are also counter-rotating elements with a second rotation axis **3d** parallel to the first rotation axis 3b.

Second heat-sealing devices 33 also include heating elements **32** defining at least one contact surface **300** and preferably extending circumferentially with respect to the second rotation axis 3d.

The sachet packaging machine 1 conveniently comprises at least one insert **5.** Each insert 5 is placed near each contact surface 300. In addition, each is configured to reduce heat diffusion from the heating element 32 to the sheets 10. In this way, the inserts 5 have the advantage of protecting the sheets 10 from excessive heating. This avoids altering the sheets 10 near the portion where the heat sealing 103 is done. In particular, effects such as burning or irregularities in heat sealing 103 are avoided. Therefore, the protective effect against excessive heating occurs in the areas near each heat sealing 103.

In this regard, inserts 5 preferably include a thermally insulating material. For example, inserts 5 can be made of polymeric material.

Each insert 5 preferably includes one cavity **50.** It is an internal cavity in insert 5. Specifically, it is apt to pass a refrigerant fluid. For example, the refrigerant fluid may include air. The refrigerant fluid may also include water. This solution is advantageous since it allows for the cooling of inserts 5. As a result, inserts 5 allow more efficient temperature control in the vicinity of heat-sealing 103. In fact, due to the flow of the cooling fluid, each insert 5 can cool the portion of the sheets 10 in the vicinity of the heat-sealing 103 more effectively than the sole limitation to heat diffusion due to the presence of the inserts 5.

Cavity 50 may extend mainly along a preferential direction. For example, cavity 50 may extend mainly along the sealing axis 3a. Therefore, it can be in the form of a cooling channel within which refrigerant fluid can flow.

Each insert 5 may include preferably one cavity 50. In these configurations, cavity 50 can be in fluid passage connection with the outside. Therefore, the refrigerant fluid can flow inside the insert 5. For example, each insert 5 may include preferably one pass-through cavity 50. In particular, cavity 50 can be in fluid passage connection with the outside through two different openings. In this way, air from outside can pass through each insert 5. In this way, the flow of refrigerant fluid inside cavity 50 makes the refrigeration of insert 5 more efficient. In fact, for these conformations, it is possible to have a circulation of the cooling fluid that allows the cooling effect inside the insert 5 to be intensified.

As an alternative, cavity 50 can be in fluid passage connection with the outside through two different openings. In this regard, cavity 50 can cause insert 5 to have a greater surface area exposed to the passage of refrigerating fluid.

Cavity 50 can preferably pass through each insert 5. For example, inserts 5 can be mutually connected by cavity 50. In particular, it may correspond to a network of interconnected channels and partly passing through inserts 5.

This solution allows the cavity 50 to be structured in such a way as to adapt its shape to different solutions.

The sachet packaging machine 1 may include preferably more than one cavity 50. In detail, each of said cavities 50 can pass through a plurality of inserts 5. In addition, the plurality of inserts 5 can be placed in corresponding positions along the sealing axis 3a and aligned along the sealing axis 3a. For example, a group of inserts 5 aligned along the sealing axis 3a can be interconnected. The cavity 50 connecting the aligned inserts 5 may correspond to a channel mainly extended along the sealing axis 3a. This structure has the advantage of being simpler to make, plus it allows for a reduction in the length of the path in which the refrigerant fluid flows into the cavity.

Depending on the arrangement of inserts 5 with respect to the contact surface there may be several distinct groups of inserts 5 aligned along the sealing axis 3a, each group of inserts being interconnected by a cavity 50 conformed as a straight channel parallel to the sealing axis 3a.

Cavity 50 can preferably define a first access **50a.** It corresponds to a portion in fluid passage connection with a first external environment. Furthermore, cavity 50 can preferably define a second access **50b.** It can be opposed to the first access 50a. The second access 50b can be in fluid passage connection with a second external environment.

For example, the first and second accesses 50a, 50b may correspond to the accesses of a cavity 50 conformed as a channel in which accesses 50a and 50b correspond to the extreme portions into which the refrigerant fluid flows when entering or leaving the channel.

If there are multiple cavities 50 conformed as separate channels, each channel may include a first access 50a and a second access 50b, respectively. Each first access 50a and each second access 50b are in fluid passage connection with respective first environments and second environments, respectively.

Alternatively, cavities 50, conformed as separate rectilinear channels aligned with the sealing axis 3a, can be arranged so that their respective first accesses 50a are in fluid passage connection with a same first environment. Similarly, cavities 50, conformed as separate rectilinear channels aligned with the sealing axis 3a, can be arranged so that their respective second accesses 50b are in fluid passage connection with a same second environment.

The first external environment may preferably be in fluid passage connection with a pump. It is suitable for introducing the refrigerant fluid into the first access 50a. Therefore, the refrigerant fluid can flow into cavity 50 from the first access 50a to the second access 50b. Then, the pump can feed the refrigerant fluid into the first access 50a so that it flows through the channel. It can then leak out of cavity 50 from the second access 50b to the second external environment. The second external environment can perform the function of releasing the refrigerant fluid at the end of the passage inside cavity 50. Alternatively, the second environment may correspond to a refrigerant recirculation pipe.

In general, these solutions are convenient since they allow efficient management of cooling of inserts 5 and, consequently, control of process temperatures in the vicinity of heat sealing 103.

In the sachet packaging machine 1 at least one of the inserts 5 preferably flanks circumferentially, around the rotation axis 3b, at least one of the heating elements 32. This reduces heat transfer from the heating elements 32 to the sheets 10 near the contact surface 300. In the example in Fig. 2, the inserts flank the heating elements 32.

In fact, this arrangement of the inserts 5 ensures that the sheets 10 do not experience excessive heating during the rotational motion of the rotating elements 31. In fact, the inserts 5 pass close to the sheets 10 as they approach the contact surface 300 during the rotational motion of the rotating elements 31 around the rotation axes 3b.

In particular, two inserts 5 preferably flank preferentially circumferentially, around the rotation axis 3b, at least one of the heating elements 32 of the first heat-sealing device 30. In this way, the sheets 10 approach the inserts 5 both before and, if necessary, also after the contact surface 300 during the rotational motion of the rotating elements 31. By doing so, enlargement of the area where heat sealing is done is prevented.

Inserts 5 may be curved so as to have a concavity facing the rotation axis 3b. In this way, the inserts do not cause bulk or deformation near the heat-sealing process. inserts 5 can also be placed near the second heat-sealing devices 33. In this way, the same effect of protecting the sheets 10 from excessive heating near the heat seals 103 is also realized along the edges of the sachet 101 made by the second heat-sealing devices 33. In such a case, they axially flank at least one of the heating elements 32 of the second heat-sealing device 33.

The sachet packaging machine 1 preferably includes at least one cutting element, configured to perform a sheet 10 cutting operation along the first axis 3a, at the heat-sealing 103 and per se known.

The sachet packaging machine 1 can include a sequence of sealing units 3 equidistant along the sealing axis 3a. A nozzle of the filling unit 4 can be placed at each first heat-sealing device 30. In this way, sheets 10 can be divided into a plurality of sachets 101 that can be produced and filled at the same time.

The operation of the sachet packaging machine 1 previously described in structural terms is as follows.

A pair of sheets 10 is moved in such a way that each sheet 10 in the pair is facing the other. Handling elements 2 perform this operation. In detail, the handling elements 2 can be two parallel cylinders that facilitate the movement of the sheets 10 to the space between them. Sheets 10, once in this space, move along the feed direction 2a. The dragging of sheets 10 is done by the rotating elements 33. They may be a pair of parallel, counter-rotating cylindrical rollers that moves sheets 10 in the space between them. The heating elements 32, housed on the rotating elements 31, and, in particular, their contact surfaces 300, enable heat sealing 103 along the sealing axis 3a. Simultaneously, the heating elements 32 and contact surfaces 300 on the second heat-sealing devices 33 carry out heat sealing 103 along a direction parallel to the feed direction 2a. The presence of the inserts 5 near each contact surface 300 ensures that the sheets 10 are not subjected to excessive heating of each portion of the sachet 101 near a heat sealing 103. In fact, the inserts 5 placed on the first heat-sealing devices 30 are in positions to anticipate and, if necessary, follow the contact surface 300 during the rotational motion of the rotating elements 31. Doing so avoids overheating both the portion of the sheets 10 that follows the heat-sealing 103 zone and the portion that precedes it.

The cutting elements perform cutting operations at each heat sealing 103.

Simultaneously, a nozzle 40 positioned at the level of the first heat-sealing device 30 ejects a metered amount of product 102 to be inserted into the newly formed sachet 101 having an opening in the portion opposite to the heat sealing 103 made by the first heat-sealing device 30.

Once filled, the sachet 101 is dragged along the feed direction 2a, and with the subsequent heat sealing carried out by the first heat-sealing device 103, the sachet 101 containing the product 102 is closed and made into a filled sachet 100.

The sachet packaging machine 1 can make a plurality of sachets 101 and products 100 from the same pair of sheets 10 by means of a set of sealing units 3 and a set of nozzles 40.

The sachet packaging machine 1 according to this invention achieves important advantages.

In fact, it is able to prevent the material from overheating in areas close to those where the heat sealing takes place. Therefore, the sachet packaging machine 1 can also be used with laminated multilayer sheets, for which the sealing window is narrow. The sachet packaging machine 1 therefore allows better control of process temperatures so that materials that require more attention to temperatures can be processed.

An additional advantage is the efficiency of temperature control due to the presence of the cavities inside the inserts crossed by the refrigerant fluid. In fact, this solution ensures that the inserts are controlled in temperature and thus can maintain the same efficiency in heat exchange throughout the process.

Another advantage of sachet packaging machine 1 is to make products with better precision. In fact, heat sealing occurs mainly in the intended portion with reduced probability of overheating the portions close to the heat-sealing zone.

In fact, since burns, alterations, or breakage of the sachet material in the areas near the heat sealings are avoided, the resulting products match the intended shape.

In this regard, the presence of cooling channels inside the inserts enables further improvement in the accuracy of the obtained products by controlling temperatures. Another advantage of the sachet packaging machine 1 is the reduction of waste, since more products made meet the required standards and, as a result, the percentage of defective products is reduced.

Variations may be made to the invention that fall within the scope of the inventive concept defined in the claims.

In this context, all the details can be replaced by equivalent elements and any materials, shapes and dimensions can be used.

## Claims

1. Sachet packaging machine (1) suitable for producing filled sachets (100) comprising sealed sachets (101) containing a product (102), said sachet packaging machine (1) being at least configured to convert at least one pair of sheets (10) into said sachets (101), to insert said product (102) into said sachets (101) so as to obtain said filled sachets (100);
said sachet packaging machine (1) comprising at least:
- a handling unit (2), suitable for handling said sheets (10) along a feed direction (2a);
- a sealing unit (3) suitable for performing a sealing operation of said sheets (10) in order to obtain each of said sachets (101) and comprising at least one heat-sealing device (30, 33) suitable for sealing said sheets (10) along a sealing axis (3a), thereby producing a heat sealing (103); said first heat-sealing device (30) comprising at least one heating element (32) suitable for coming into contact with said sheets (10) and for producing said heat sealing;
- each of said heating element(s) (32) defining a contact surface (300) suitable for coming into contact with said sheets (10) to perform said heat sealing (103), said heat sealing (103) being coincident with the portion of said sheets (10) coming into contact with said contact surface (300);
- a filling unit (4) suitable for inserting said product (102) into each of said sachets (101);
and **characterized by** further comprising:
- at least one insert (5) placed in proximity to said (at least one) contact surface (300) and configured to reduce the diffusion of heat from said heating element (32) to said sheets (10).
- each said insert (5) includes a cavity (50) internal to said insert (5) and suitable for letting a refrigerant fluid pass through it.

2. Sachet packaging machine (1) according to claim 1, wherein said at least one sealing device (30, 33) comprises a pair of said heating elements (32) and, consequently, a pair of said contact surfaces (300), configured to substantially contact each other by including and sandwiching said sheets (10) when said heat sealing (103) is carried out.

3. Sachet packaging machine (1) according to the preceding claim, wherein each said heat-sealing device (30, 33) is placed on rotating elements (31).

4. Sachet packaging machine (1) according to the preceding claim, wherein said at least one heat-sealing device (30, 33) comprises said counter-rotating elements (31) each aligned and rotating about a rotation axis (3b) parallel to said sealing axis (3a).

5. Sachet packaging machine (1) according to claim 3 or 4, wherein said (at least one) heat-sealing device (30, 33) comprises a first heat-sealing device (30) wherein each of said rotating elements (31) defines a body from which at least one of said heating elements (32) extending axially, radially protrudes, with respect to said rotation axis (3b), and wherein at least one of said inserts (5) circumferentially flanks, with respect to said rotation axis (3b), at least one of said heating elements (32).

6. Sachet packaging machine (1) according to the preceding claim, wherein two of said inserts (5) circumferentially flank, with respect to said rotation axis (3b), at least one of said heating elements (32).

7. Sachet packaging machine (1) according to the preceding claim, wherein only one of said inserts (5) circumferentially flank, with respect to said rotation axis (3b), and preceding it in the direction of rotation, at least one of said heating elements (32).

8. Sachet packaging machine (1) according to the preceding claim, wherein said at least one heat-sealing device comprises a second heat-sealing device (30) in which each of said rotating elements (31) defines a body from which at least one of said heating elements (32), extending circumferentially, protrudes axially with respect to said rotation axis (3b), and wherein at least one of said inserts (5) axially flanks, with respect to said rotation axis (3b), at least one of said heating elements (32).

9. Sachet packaging machine (1) according to any one of the preceding claims, wherein said inserts (5) comprise a thermally insulating material.

10. Sachet packaging machine (1) according to the preceding claim, wherein said inserts (5) are made of a polymeric material.

11. Sachet packaging machine (1) according to any one of the preceding claims, wherein said cavity (50) passes through each said insert (5).

12. Sachet packaging machine (1) according to any one of the preceding claims, comprising a plurality of said cavities (50), each of said cavities (50) passing through a plurality of said inserts (5), said plurality of said inserts (5) being located in corresponding positions along said sealing axis (3a) and aligned along said sealing axis (3a).

13. Sachet packaging machine (1) according to any one of the preceding claims, wherein said cavity (50) defines a first access (50a) and a second access (50b) opposite said first access (50a), said first access (50a) being in fluid passage connection with a first external environment and said second access (50b) being in fluid passage connection with a second external environment.

14. Sachet packaging machine (1) according to the preceding claim, wherein said first external environment is in fluid passage connection with a pump suitable for introducing said fluid into said first access (50a), said fluid flowing into said cavity (50) from said first access (50a) to said second access (50b) and flowing out of said cavity (50) from said second access (50b) to said second external environment.

15. Sachet packaging machine (1) according to any one of claims 1-10, wherein each said insert (5) comprises one said passing-through cavity (50).
